# EUROPEAN PATENT APPLICATION

(11) **EP 1 837 833 A1**
(43) Date of publication of application: **26.09.2007**
(21) Application number: 05820125.2
(22) Date of filing: 21.12.2005
(51) Int. Cl.: G07F 9/00, G07F 5/22, G07F 11/40, G07F 11/54

(54) **MERCHANDISE MANAGEMENT SYSTEM FOR MERCHANDISE DISCHARGE DEVICE**

(30) Priority: 21.12.2004 JP 2004369328
(71) Applicant: Yujin Company, Ltd., Katsushika-ku Tokyo 124-0012 (JP)
(72) Inventor: ATSUTA, Junichi, c/o Yujin Company Ltd., Tokyo 1240012 (JP); FUKUMOTO, Tomochika, c/o Yujin Company Ltd., Tokyo 1240012 (JP)
(74) Representative: Bailey, David Martin
(86) International application number: PCT/JP2005/023489
(87) International publication number: WO 2006/068178

(57) **Abstract**

A merchandise discharge device body has a detection means for directly or indirectly detecting discharge of merchandise and an RFID (Radio Frequency Identification), where the merchandise discharge device body transmits power of an operation member operated by a user to a discharge member, operating the discharge member to discharge the merchandise. The number of pieces of merchandise to be discharged, which number is obtained by the result of detection by the detection means, is stored in a semiconductor memory of the RFID. Merchandise management is performed by reading the merchandise data, stored in the semiconductor memory, by an external reader.

## Description

### Technical Field

The present invention relates to a merchandise management system for merchandise discharge device.

### Background of the Invention

For an automatic vending machine for discharging merchandises by using a power source for home use or a power source for commercial use, various merchandise management systems have been provided (for example, refer to Patent Documents 1 and 2).
Patent Document 1: JP-S56-47891A
Patent Document 2: Japanese Patent No. 2521554B

### Disclosure of the invention

### Problem to be Solved by the Invention

In contrast, in an automatic vending machine with no use of a power source for home use nor a power source for commercial use, for example, in an automatic vending machine for merchandises put in capsules, data acquisition of all sales or the like has actually been conducted by attaching thereto a mechanical counter or a counter with an LC display using a battery, and by a circuit staff to collect data manually. In a case that such data acquisition has been conducted manually, such work is troublesome and has a problem to be subject to clerk mistake.

The present invention has been developed in view of the above described problems, it is an object of the invention is to provide a merchandise management system for merchandise discharge device with no use of a power source for home use nor a power source for commercial use, to facilitate merchandise management.

### Means for Solving Problems

A merchandise management system according to a first invention, comprises: a merchandise discharge device main body to discharge a merchandise by operating a discharging member according to transmission to the discharging member, of power of an operation member which is operated by a user; a detection unit to detect discharge of a merchandise directly or indirectly; and an RFID including a semiconductor memory to store merchandise data obtained on the basis of a detection result of the detection unit, wherein merchandise management is conducted by reading the merchandise data stored in the semiconductor memory, by an external reader.

According to the merchandise management system of a second invention, in the merchandise management system of the first invention, the detection unit detects a movement of the operation member or the discharging member.

According to the merchandise management system of a third invention, in the merchandise management system of the first invention, the detection unit detects a movement of a member which transmits the power from the operation member to the discharging member.

According to the merchandise management system of a fourth invention, in the merchandise management system of any one of the first, second and third inventions, the operation member is a rotational handle and the discharging member is a rotational drum.

### Effect of the Invention

According to the merchandise management system of the first invention, because of having a structure in which the number of discharged merchandises is stored in the semiconductor memory of the RFID and the number of discharged merchandises stored in the semiconductor memory can be read out by using an external reader, it is possible to obtain the number of discharged merchandises easily.

According to the merchandise management system of any one of the second to the fourth inventions, because the number of discharged merchandises is obtained by detecting a movement of the operation member, of the discharging member or of the transmitting member, generally, it is possible to make the structure of the detecting means simple in comparison with a case of detecting discharge of merchandises directly.

### Brief Description of the Drawings

[FIG. 1] This is a perspective view showing an automatic vending machine of an embodiment of the invention.
[FIG. 2] This is a cross-sectional view of an approximate upper half of the automatic vending machine, when seen from a side.
[FIG. 3] This is a cross-sectional view of the container in a state of the merchandise entrance exposed, in the approximate upper half of the automatic vending machine.
[FIG. 4] This is a view for showing the merchandise discharging mechanism of the automatic vending machine.
[FIG. 5] This is a perspective view of a rotary drum and an opening regulating plate of the automatic vending machine.
[FIG. 6] This is a plan view of the rotary drum of the automatic vending machine.
[FIG. 7] This is a view for showing a rotary drum and an opening regulating plate of the automatic vending machine.
[FIG. 8] This is a view for showing a rotary drum and an opening regulating plate of the automatic vending.
[FIG. 9] This is a view for showing a merchandise discharge and the like, of the automatic vending machine.
[FIG. 10] This is a view for showing a configuration of a counter unit attached to the automatic vending machine.
[FIG. 11] This is a view for showing a merchandise management system when the main body of the automatic vending machine is connected.
[FIG. 12] This is a view for showing a merchandise management system according to another embodiment when the main body of the automatic vending machine is connected.

### The Best Mode to Conduct the Invention

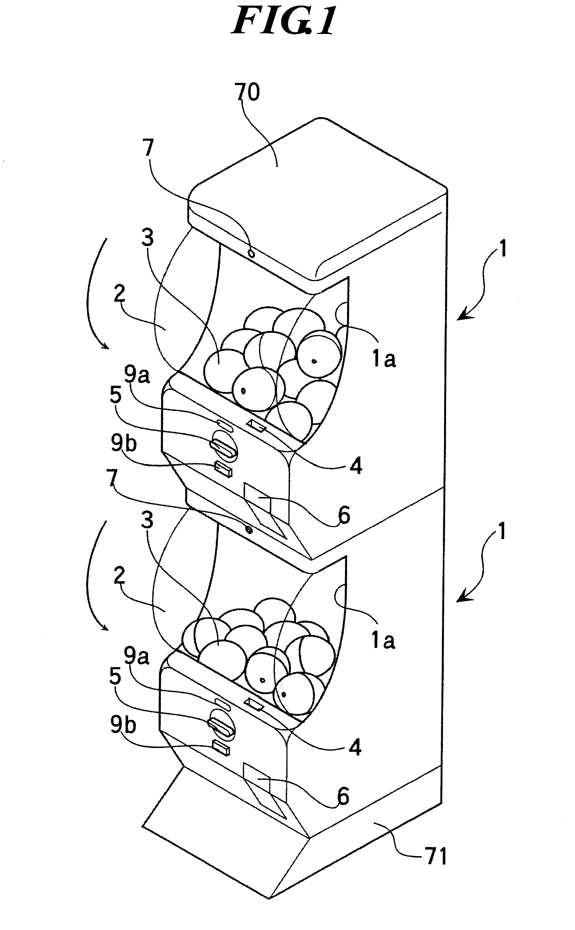

A merchandise discharge device according to an embodiment of the invention which is applied for an automatic vending machine, will be explained as follows. In FIG. 1, a perspective view showing an automatic vending machine having double-layered main bodies is shown.

In the figure, the reference numerals 1 and 1 denote main bodies of the automatic vending machine. In the front side of each main body 1 of the automatic vending machine, an opening 1a is formed, and a container 2 for containing and holding a large number of capsule merchandises 3 therein is provided to fit in the opening 1a.

In each main body 1 of the automatic vending machine, when putting a predetermined type of coin into a coin insert 4 and then giving a handle 5 one rotation in the clockwise direction, one capsule merchandise 3 is discharged from a merchandise discharge 6.

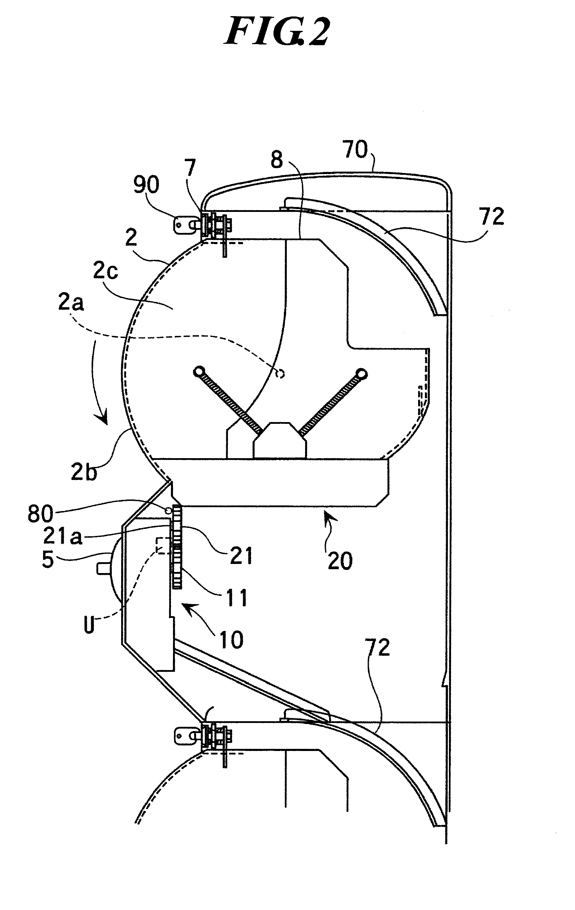

In order to fill up capsule merchandises 3 into the main body 1 or to exchange the capsule merchandises 3 which are already contained in the main body for another type of capsule merchandises, a key 90 (shown in FIG. 2) is inserted into a key hole of a cylinder 7 which is provided at an upper portion of the main body 1 of the automatic vending machine and then rotated in a predetermined direction. Accordingly, the lock is disconnected to make the container 2 rotatable. When rotating the container 2 around the lateral axis (horizontal axis) 2a in the direction shown in FIG. 2, like falling forward, a merchandise entrance 8 which is formed in an upper side of the container 2 is exposed. In this state, it is possible to fill up capsule merchandises 3 into the main body 1 or to exchange the capsule merchandises 3 for another type of capsule merchandises, through the exposed merchandise entrance 8 of the container 2.

In the main body 1 of the automatic vending machine, a coin or the like which was put in the main body 1 by mistake is given back to a coin return 9b by pushing down a coin return lever 9a.

Next, the structure of the main body 1 of the automatic vending machine will be explained in detail. The main body 1 of the automatic vending machine comprises the container 2, a coin sorting device 10, and a merchandise discharging member 20, as shown in FIG. 2. The merchandise discharging member 20 forms the bottom of the container 2.

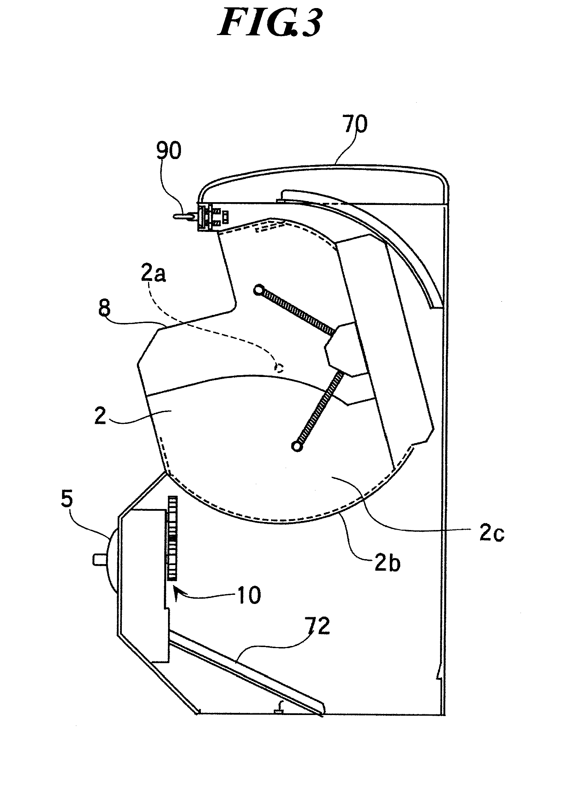

The front wall 2b and the almost front half portions of the side walls 2c are made of light transmissive material. For example, a transparent plastic material is used for the portion. The front wall 2b of the container 2 has a curved shape which expands forward. An opening as a merchandise entrance 8 of the container 2 is formed to extend from the forward upper end portion to the rear end portion. Although it is not limited, in this embodiment, the merchandise entrance 8 is formed in Z-shape, i.e., in a step-shape, in a side sectional view of FIG. 2. Supplement of the capsule merchandises 3 in the vending machine or exchange of the capsule merchandises 3 to another type can be carried out by rotating the container 2 around the axis 2 in the direction shown in FIG. 3, to expose the opening of the merchandise entrance 8. By further rotating the container 2 in the same direction than the state shown in FIG. 3, it is also possible to repair the coin sorting device 10 and the like by using the merchandise entrance 8.

The coin sorting device 10 judges whether the put-in coin is true or false and whether a predetermined number of coins are put in. That is, the coin sorting device 10 permits the handle 5 to rotate only when the predetermined number of normal coins were put in. In the coin sorting device 10, when rotating the handle 5, the gear 11 provided in the rear side rotates together with the rotation of the handle.

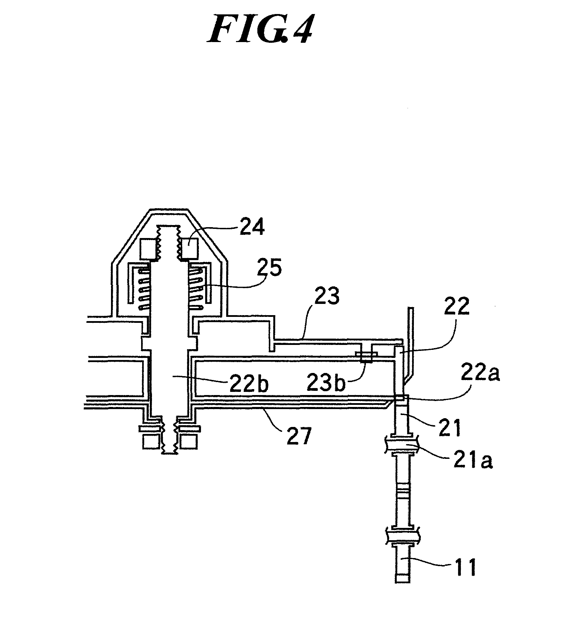

On the other hand, the merchandise discharging member 20 is for discharging a capsule merchandise 3 with rotation of the handle 5. That is, The gear 11 is engaged with the gear 21 which is attached to the shaft 21a, as shown in FIG. 2. The gear 21 is engaged with a rack gear 22a which is attached to a drum 22, as shown in FIG. 4. Accordingly, when the handle 5 is turned, the drum 22 is rotated with respect to a shaft 22a through the gears 11 and 21 and the rack gear 22a. Engagement of the gears 11 and the rack gear 22a can be released by rotation of the container 2 around the lateral axis 2a, (as shown in FIG. 3) .

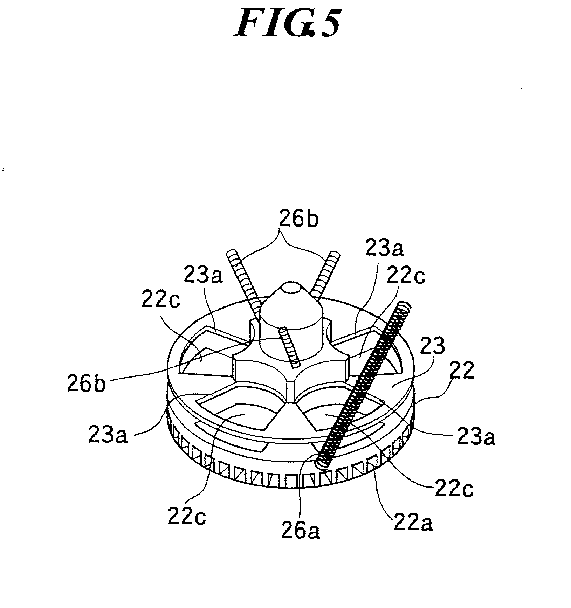

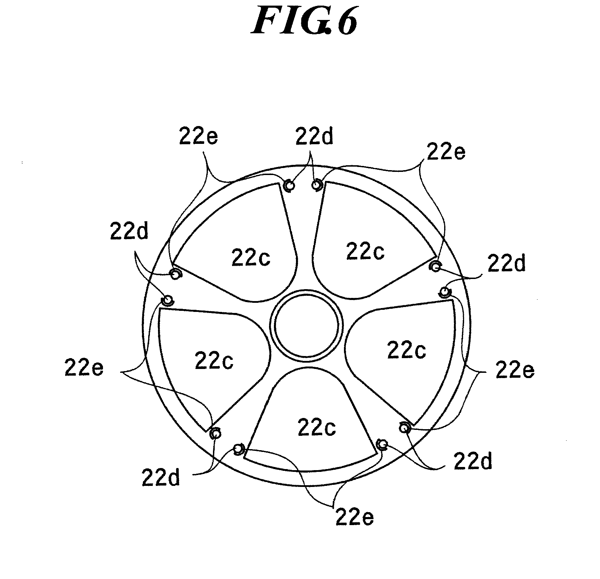

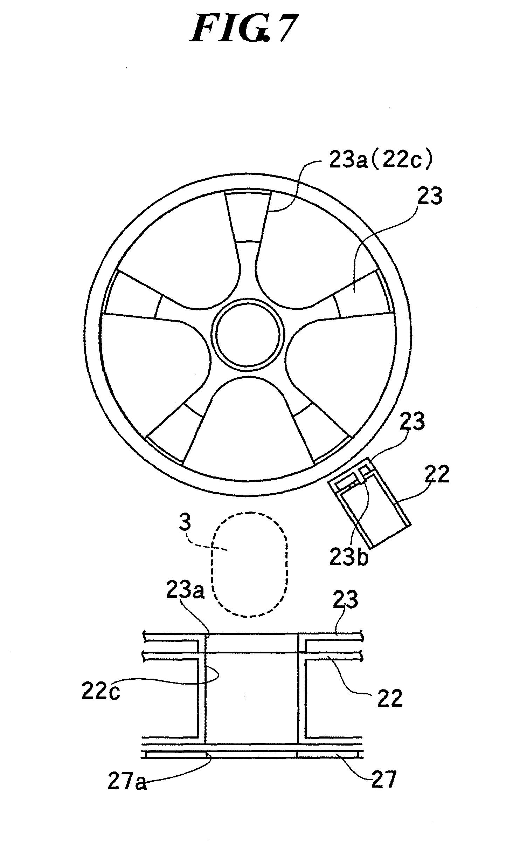

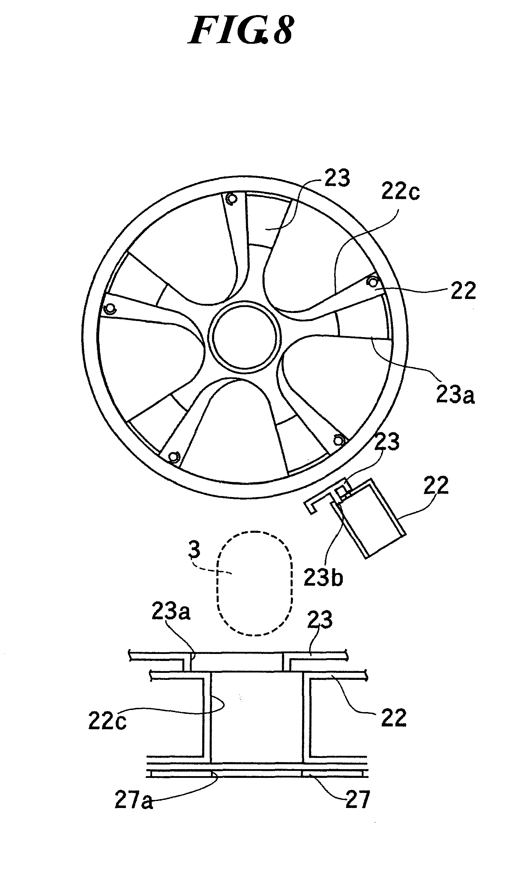

As shown in FIG. 5, the drum 22 is provided with a plurality of hanging bell-shaped merchandise discharging openings 22c. When one rotation is given to the handle 5, the drum 22 is rotated by a pitch of opening. Further, on the drum 22, an opening regulating plate 23 is provided with openings 23a having almost the same shape as the hanging bell-shaped merchandise discharging openings 22c and arranged at the same pitch. As shown in FIG. 4, the opening regulating plate 23 is pressed against the drum 22 due to a spring 25 disposed between a nut 24 screwed onto an upper end portion of the shaft 22b and itself. Further, in the lower surface of the opening regulating plate 23, one boss (positioning projection) 23b is provided between the adjacent openings 23a and 23a of each pair, as shown in FIG. 4. On the other hand, as shown in FIG. 6, the drum 22 is provided with two fitting holes (positioning holes) 22d between the adjacent merchandise discharging openings 22c and 22c of each pair for selectively fitting over the foregoing boss 23b. By pulling out the bosses 23b from the fitting holes 22d in the state where the opening regulating plate 23 is separated from the drum 22 against the biasing force of the spring 25, the opening regulating plate 23 is allowed to rotate relative to the drum 22. Further, as shown in FIG. 6, at the edge portions of the fitting holes 22d, semicylindrical stoppers 22e are provided, respectively. Accordingly, when the opening regulating plate 23 is rotated in the clockwise or counterclockwise direction, the bosses 23b abut the stoppers 22e, respectively. Thus, if released from a hand in that state, the bosses 22e are surely fitted into the fitting holes 22d due to the biasing force of the spring 25. In this case, if the boss 23b is fitted into one of the fitting holes 22d between the adjacent merchandise discharging openings 22c and 22c of each pair, as shown in FIG. 7, since the merchandise discharging openings 22c of the drum 22 and the openings 23a of the opening regulating plate 23 are matched, it is possible to discharge a large capsule merchandise 3. On the other hand, if the boss 23b is fitted into the other of the fitting holes 22d between the adjacent merchandise discharging openings 22c and 22c of each pair, as shown in FIG. 8, since the merchandise discharging openings 22c of the drum 22 and the openings 23a of the opening regulating plate 23 are not matched, a portion of each merchandise discharging opening 22c is closed by the opening regulating plate 23 so that only a small capsule merchandise 3 can be discharged. In this manner, effective opening areas of the merchandise discharging openings 22c can be easily changed depending on a size of the capsule merchandise 3 to be sold. Here, the effective opening areas of the merchandise discharging openings 22c are changed in two steps. On the other hand, it may also be arranged that the effective opening areas of the merchandise discharging openings 22c are changed in three or more steps.

Under the drum 22, as shown in FIGS. 4, 7 and 8, a fixed cover 27 with a merchandise drop opening 27a formed therein is provided. The capsule merchandise 3 caught at the merchandise discharging opening 22c is discharged when it comes to the position the merchandise drop opening 27a of the fixed cover 27.

Further, in this embodiment, the opening regulating plate 23 is provided with a rod-like spring 26a so as to ensure falling of the filled capsule merchandise 3 into the merchandise discharging opening 22a, as shown in FIG. 5. Because the rod-like spring 26a is positioned above the merchandise drop opening 27a, the capsule merchandises 3 can be discharged one by one through the merchandise drop opening 27a. At the central positions of the opening regulating plate 23, rod-like springs 26b for stirring the capsule merchandises 3 are attached.

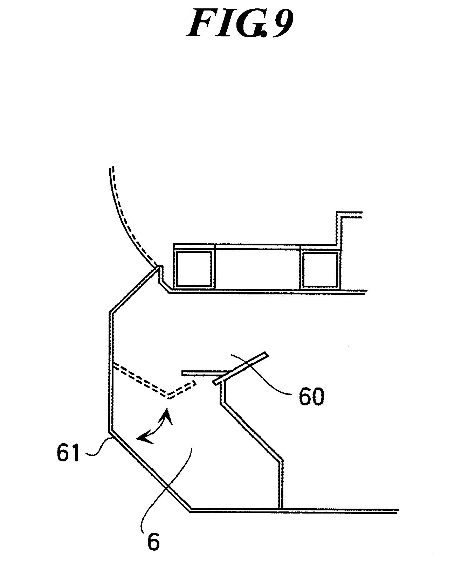

As shown in FIG. 9, in the merchandise discharge 6, a door 61 is provided so that it can be pushed toward a merchandise discharging passage 60.

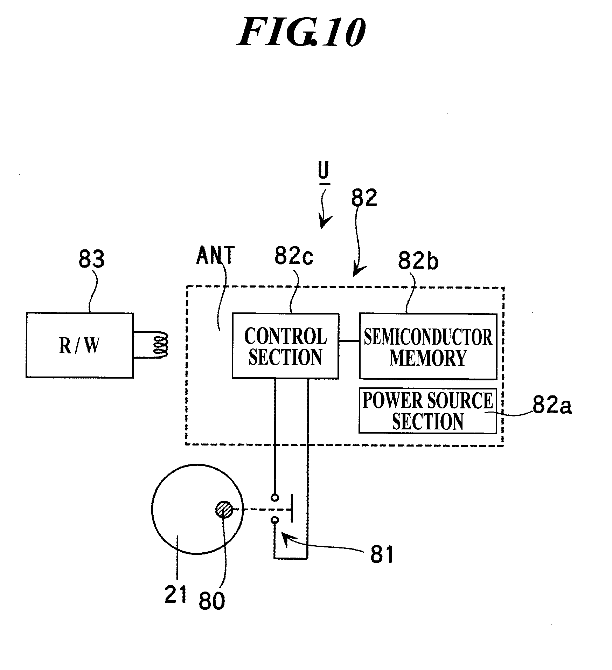

Each of the upper and lower main bodies 1 and 1 of the automatic vending machine has almost the same structure. Although either of the main bodies 1 and 1 may be at an upper position or a lower position, the upper main body 1 of the automatic vending machine is provided with a top board 70 on the top thereof, (as shown in FIGS. 1 to 3). The lower main body 1 is provided with a coin storage portion 71 at the bottom thereof, (as shown in FIGS. 1 and 10) .
The coins which were put into the upper main body are dropped to the coin storage portion 71, by passing through the rear side of the container 2, that is, through a coin guide member 72 which is provided in the lower main body 1. The coins stored in the coin storage portion 71 can be taken out by opening a door which is not shown in the figures. As described above, when piling up a plurality of main bodies 1 and 1, it is possible to facilitate collection of coins by using the base or bottom portion of the lowest main body 1 as the coin storage portion 71. In the above embodiment, although coins are dropped to the coin storage portion 71 by passing through the rear side of the container 2, the coins may be also dropped to the coin storage portion 71 by passing through the lateral side the container 2. Such a technical idea can be applied not only for the automatic vending machine of the present invention but also for every type of article discharging device which exists at present time or may exist in the future.

Conventionally, the article discharging device, e.g., automatic vending machines and the like, had a coin storage portion every main body. In such a conventional article discharging device having a plurality of piled-up main bodies, because a coin storage portion was provided in each main body, much time was required for taking coins out of all coin storage portions. According to the article discharging device having a plurality of piled-up, e.g., double layered, main bodies, of the embodiment, because the coin storage portion is provided at the bottom portion of the lower main body and thus all coins which were put into the upper main body can be collected in the coin storage portion of the lower main body, it is possible to take all coins out of only one coin storage portion conveniently. Since the coin storage portion is not required for every piled-up main bodies of the article discharging device, it is also possible to reduce the production costs thereof. In this case, it is preferable that the upper and lower main bodies have almost the same structure and the coin storage portion is provided detachably in the lower side of the lower main body of the article discharging device.

Further, in the main body 1 of the automatic vending machine, a counter unit U is provided, as shown in FIG. 2. As shown in FIG. 10, a permanent magnet 80 is attached on an end surface in the front side of the gear 21. In the back side of the operation unit in the main body 1, a detection switch (detection unit) 81 and an RFID 82 which is connected to the detection switch 81, are provided. The detection switch 81 and RFID 82 are contained in a case to constitute a counter unit U. In the case, a button shaped battery is contained to function as an electric power source 82a for the RFID 82.

In the embodiment, as the detection switch 81, a leed switch is used. When the permanent magnet 80 moves to the position which faces off against the leed switch by rotation of the gear 21, a moving contact of the leed switch is in contact with a fixed contact, so that rotation of the gear 21 is detected by the leed switch. Accordingly, discharge of a capsule merchandise 3 is detected indirectly.

In a semiconductor memory 82b, discharge data of capsule merchandises 3 is written and stored. The discharge data is, for example, data corresponding to the number of discharged merchandises since the main body 1 of the automatic vending machine was installed. In the semiconductor memory 82b, an ID which is specific for the counter unit is also stored. Merchandise management for the main body 1 of the automatic vending machine is conducted by using the specific ID and the discharge data. In the counter unit U, a clock circuit may be installed to store individual time data when capsule merchandises 3 are discharged, as discharge data. It also may be possible to reset the discharge data by data signal from a reader/writer 83.

A control section 82c functions also as a transmitting/receiving section for transmitting or receiving data. That is, this section demodulates data signals from the reader/writer 83 or modulates data signals to be transmitted to the reader/writer 83. The control section further conducts writing/reading of data stored in the semiconductor memory 82b. The data to be read or written include ID which is specific for the counter unit, and discharge data.

Preferably, the reader/writer 83 is installed on an information terminal, e.g., a PDA or the like, to enable recognizing visually the discharged number on the basis of data which read by the reader/writer 83, on the moment. This is very convenient because data obtained by a patrol staff can be transmitted to a head office or another patrol staff.

In this embodiment, although a detection switch 81 is used as the detection unit, an optical detection unit such as a photosensor or the like can also be used. That is, it is possible to adopt an optical detection unit in which a gear 21 with a reference mark attached thereto is provided and the reference mark is optically detected every rotation of the gear 21. In this case, further electric power is required because of using a light emitting diode or the like. In this embodiment, although the detection unit is of a noncontact type in which a leed switch is used as a detection means and a permanent magnet 80 is attached on a surface of the gear 21, the detection unit may be of a contact type. For example, the detection unit may be of a contact type in which the gear 21 has a projection formed thereon and the formed projection enables an operation of the moving contact of the leed switch. In this embodiment, although a structure in which rotation of the gear 21 is detected, is adopted, another structure in which rotation of the handle 5 or the drum 22 is detected, or in which the movement of a power transmission member for transmitting a power from the handle 5 to the drum 22 is detected, may be adopted. In place of these detections, discharge of capsule merchandises 3 may be directly detected by using, for example, an optical means.

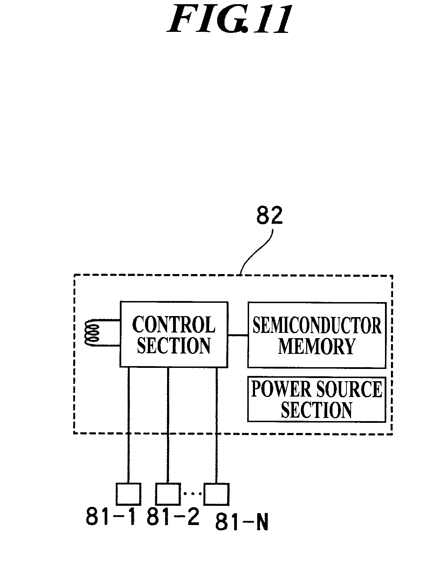

FIG. 11 shows a merchandise management system in a case of a plurality of automatic vending machine main bodies 1 connected to one another. In the merchandise management system, detection switches 81-1, 81-2, ..., 81-N of the main bodies 1, 1, ..., and 1 are connected to one RFID 82 through a selector 84, so that the respective discharge data of the main bodies 1, 1, ..., and 1 are written on the semiconductor memory 82b of the one RFID 82. The one RFID 82 is provided in the one main body 1. The merchandise management system can be made up at low costs because each of the main bodies 1, 1, ..., and 1 other than the one main body 1 having the one RFID 82 provided, is required to have only a detection switch, and therefore it is possible to reduce the number of required RFIDs 82. Further, the merchandise management can be conducted easily by reading the data of the one RFID 82 by using the reader/writer 83 because data of a plurality of automatic vending machine main bodies 1 can be obtained.
The one RFID 82 may be provided in a data storage device (not shown) which is provided out of the main body 1. In this case, only a detection switch 81 is provided on each of the main bodies 1, 1, ..., and 1.

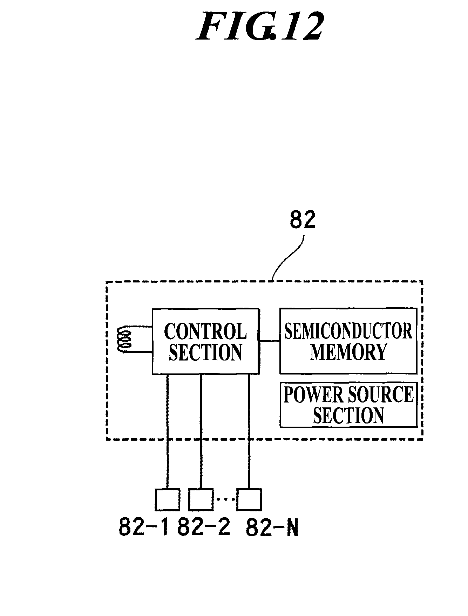

FIG. 12 shows a merchandise management system according to another embodiment, in a case of a plurality of automatic vending machine main bodies 1 connected to one another. In the merchandise management system, RFIDs 82-1, 82-2, ..., 82-N provided on the automatic vending machine main bodies 1, 1, ..., and 1 are connected to one RFID 82 through a selector 84, so that the respective discharge data of the main bodies 1, 1, ..., and 1 are written on the semiconductor memory 82b of the one RFID 82. In the merchandise management system shown in FIG. 11, in order to obtain data from the detection switches 81 of other automatic vending machine main bodies 1, the automatic vending machine main body 1 for centrally controlling obtains data directly from the detection switches 81 of the other automatic vending machine main bodies 1. On the contrary, in the merchandise management system shown in FIG. 12, the one automatic vending machine main body 1 obtains data once stored on the semiconductor memory 82b of the RFID 82 of the other automatic vending machine main bodies 1. In also this case, the merchandise management can be conducted easily by reading the data of the one RFID 82 by using the reader/writer 83 because data of a plurality of automatic vending machine main bodies 1 can be obtained.

Although the embodiments of the present invention has been explained, it should also be understood that the present invention is not limited to the embodiment as the above described and various changes and modifications may be made to the invention without departing from the gist thereof.

In the above embodiments, although only RFIDs 82 including an electric power source section are shown, such power source section is not required by using a configuration in which induced electromotive force is generated in the RFID 82 by rotation of the gear 21. In the above-described embodiment, although the invention is explained with using merchandises put in capsules as an example, as a matter of course, the invention can be applied to other merchandises other than merchandises put in capsules.

### Industrial Utilization Possibility

The present invention can be properly utilized for conducting merchandise management of a merchandise discharge device without a power source for home use nor a power source for commercial use.

### Explanation of Reference Sign

- 1: automatic vending machine main body
- 2: container
- 3: merchandises put in capsules
- 8: merchandise entrance
- U: counter unit
- 81: detection switch
- 82: RFID
- 83: reader/writer

## Claims

1. A merchandise management system for merchandise discharge device, comprising:
a merchandise discharge device main body to discharge a merchandise by operating a discharging member according to transmission to the discharging member, of power of an operation member which is operated by a user;
a detection unit to detect discharge of a merchandise directly or indirectly; and
an RFID including a semiconductor memory to store merchandise data obtained on the basis of a detection result of the detection unit,
wherein merchandise management is conducted by reading the merchandise data stored in the semiconductor memory, by an external reader.

2. The merchandise management system for merchandise discharge device as claimed in claim 1, wherein the detection unit detects a movement of the operation member or the discharging member.

3. The merchandise management system for merchandise discharge device as claimed in claim 1, wherein the detection unit detects a movement of a member which transmits the power from the operation member to the discharging member.

4. The merchandise management system for merchandise discharge device as claimed in claim 1, 2 or 3, wherein the operation member is a rotational handle and the discharging member is a rotational drum.
